# EUROPÄISCHE PATENTSCHRIFT

(11) **EP 2 562 411 B1**
(45) Veröffentlichungstag und Bekanntmachung des Hinweises auf die Patenterteilung: **19.06.2019**
(21) Anmeldenummer: 12005010.9
(22) Anmeldetag: 06.07.2012
(51) Int. Cl.: F03B 13/06, H02J 3/28, H02J 7/34, H02J 3/38

(54) **Kraftwerk mit einem Speicher für die zur Energieerzeugung genutzten Materie**
Power pant with a storage device for the material used to create energy
Centrale électrique avec entrepôt pour la matière utilisée pour produire de l'énergie

(30) Priorität: 23.08.2011 DE 102011110853
(43) Veröffentlichungstag der Anmeldung: 27.02.2013
(73) Patentinhaber: RWE Power Aktiengesellschaft, 45128 Essen (DE)
(72) Erfinder: Dymek, Thomas, 45141 Essen (DE)
(74) Vertreter: KNH Patentanwälte Neumann Heine Taruttis PartG mbB

(56) Entgegenhaltungen:
- EP-A2- 2 339 713
- WO-A1-2008/109264
- WO-A1-2009/015331
- WO-A2-2011/020466
- DE-U1- 20 207 758
- US-A1- 2009 189 445
- US-A1- 2011 133 688

## Beschreibung

Die Erfindung betrifft ein Verfahren zum Betrieb eines Kraftwerks mit einem Speicher für die zur Energieerzeugung genutzten Materie. Ein derartiges Kraftwerk wird im Allgemeinen zur Stromerzeugung benutzt und beispielsweise mit brennbaren Gasen wie Erdgas betrieben. Das zur Energieerzeugung verwendete brennbare Gas dient als Brennstoff für eine Gasturbine, die ihrerseits einen angekoppelten Generator zur Stromerzeugung antreibt. Die im Betrieb befindlichen Gaskraftwerke haben beispielsweise je Einheit eine Leistung von bis zum 340 MW. Die Anfahrzeit eines Gaskraftwerkes vom Stillstand auf Volllast ist sehr kurz, so dass diese vor allem zum Abdecken von Lastspitzen im Stromnetz eingesetzt werden.

Ein weiteres Beispiel für ein Kraftwerk mit einem Speicher für die zur Energieerzeugung genutzten Materie ist ein sogenanntes Pumpspeicherkraftwerk oder Pumpspeicherwerk. In einem derartigen Pumpspeicherkraftwerk wird elektrische Energie durch Hochpumpen von Wasser gespeichert, welches bei Bedarf abgelassen werden kann und mittels Turbinen und Generatoren elektrischen Strom erzeugt. Die elektrische Energie wird also durch Umwandlung in potentielle Energie von Wasser gespeichert und nach Umwandlung dieser potentiellen Energie in elektrische Energie wieder ins Stromnetz eingespeist. Da zwar ein wesentlicher Teil der aufgenommenen Energie wiedergewonnen wird, ist der Wirkungsgrad eines Pumpspeicherkraftwerks dennoch in der Regel kleiner 80 %. Die zum Hochpumpen von Wasser verwendete Pumpe oder Pumpturbine ist aus Kostengründen üblicherweise nicht regelbar, so dass nur mit einer konstanten Leistung Wasser hochgepumpt werden kann. Im Turbinenbetrieb, also beim Ablassen des Wassers, ist die erzeugte Energie von 0 bis zur maximalen Leistung der Turbine regelbar, wobei jedoch besonders im unteren Bereich die Turbine einen schlechten Wirkungsgrad aufweist.

Ein Kraftwerk als Pumpspeicherkraftwerk mit einem Speicher für die zur Erzeugung genutzte Materie sowie mit einer Speichereinrichtung für elektrische Energie, welche zur Einspeisung von Strom in ein Stromnetz ausgebildet ist, ist beispielsweise aus der DE 202 07 758 U1 bekannt.

Ein System zur dynamischen Regelung einer regenerativen Energieerzeugungsanlage ist beispielsweise aus der WO 2011/020466 A2 bekannt.

Ein System und ein Verfahren zur Bereitstellung von elektrischer Energie an ein Versorgungsnetz aus einer Batterie ist aus der EP 2 339 713 A2 bekannt. Weiterer Stand der Technik ist aus den Dokumenten WO 2009/015331 A1, US 2011/0133688 A1, US 2009/0189445 A1 und WO 2008/109264 A1 bekannt.

Der vorliegenden Erfindung liegt somit die Aufgabe zugrunde den Wirkungsgrad von Kraftwerken mit einem Speicher für die zur Energieerzeugung genutzten Materie zu verbessern, insbesondere wenn nur ein kleiner Teil der maximalen Leistung des Kraftwerks benötigt wird um eine Notstromversorgung zu gewährleisten.

Die Aufgabe wird gelöst durch ein Verfahren gemäß Anspruch 1. Vorteilhafte Ausgestaltungen der Erfindung ergeben sich aus den Unteransprüchen.

Die Speichereinrichtung für elektrische Energie verbessert somit die Flexibilität des Kraftwerks, verändert die Gesamtcharakteristik des Leistungsangebots und erhöht den Wirkungsgrad des Kraftwerks, insbesondere im unteren Leistungsbereich.

Ein weiterer Vorteil der Speichereinrichtung für elektrische Energie ist, dass die gespeicherte elektrische Energie zum Anfahren von Kraftwerken verwendet werden kann, beispielsweise durch eine Versorgung der Schaltanlagen eines Gaskraftwerks oder Pumpspeicherkraftwerks oder des Eigenbedarfs.

Das Kraftwerk ist als Gaskraftwerk oder Pumpspeicherkraftwerk ausgebildet. Die Kombination aus Gaskraftwerk mit einem Speicher für das zur Energieerzeugung genutzte brennbare Gas, wobei die Gaszuleitung als Speicher genutzt werden kann, und der Speichereinrichtung für elektrische Energie hat den Vorteil, dass das Gaskraftwerk nicht bei kurzfristigen Lastspitzen im Stromnetz angefahren werden muss. Somit wird der Wirkungsgrad insbesondere im unteren Leistungsbereich des Gaskraftwerks verbessert.

Die Speichereinrichtung dient dazu eine Spannungsversorgung bereitzustellen, während das Gaskraftwerk angefahren wird, was insbesondere nach einem Totalausfall eines Stromnetzes von Vorteil ist. Die Speichereinrichtung sollte dabei so ausgelegt sein, dass sie wenigstens für die Anfahrzeit des Gaskraftwerkes elektrische Energie in das Stromnetz einspeisen kann und dadurch die Leistungscharakteristik bedarfsgerecht einstellt.

Die Kombination aus Pumpspeicherkraftwerk und Speichereinrichtung für elektrische Energie hat darüber hinaus noch den Vorteil, dass der Pumpbetrieb des Pumpspeicherkraftwerks in einem gewissen Band regelbar wird. Das Regelband liegt dabei um die Nennleistung der Pumpe ± die Leistung der Speichereinrichtung für elektrische Energie. Das Regelband ergibt sich daraus, dass die Speichereinrichtung während des Pumpbetriebs geladen oder entladen werden kann. Im Turbinenbetrieb kann durch ein gleichzeitiges Entladen der Speichereinrichtung die maximal von dem Pumpspeicherkraftwerk erzeugte elektrische Energie erhöht werden. Weiterhin wird die maximale Speicherkapazität des Pumpspeicherkraftwerks um die Speicherkapazität der Speichereinrichtung erhöht, ohne dass das Oberbecken vergrößert werden muss.

Die Speichereinrichtung umfasst wenigstens einen Akkumulator. Je nach benötigter Speicherleistung kann die Speichereinrichtung auch einen oder mehrere Akkumulatorblöcke umfassen, wobei jeder Akkumulatorblock aus mehreren einzelnen Akkumulatoren gebildet wird. Ein Akkumulator im Sinne der Erfindung ist ein wiederaufladbarer Speicher für elektrische Energie auf beispielsweise elektrochemischer Basis.

Da elektrische Energie in einer Speichereinrichtung üblicherweise in Form einer Gleichspannung gespeichert wird und um die Leistungsabgabe oder den Leistungsbezug der Speichereinrichtung regeln zu können, umfasst die Speichereinrichtung nach einer Variante der Erfindung einen Umrichter, zur Umwandlung einer elektrischen Gleichspannung in eine elektrische Wechselspannung. Die erzeugte Wechselspannung kann nachfolgend in ein Stromnetz eingespeist werden oder zur Versorgung einer Schaltanlage eines anzufahrenden Kraftwerks genutzt werden.

Gemäß einer Variante der Erfindung umfasst das Kraftwerk wenigstens zwei Einspeiseeinrichtungen, mittels welcher die in dem Kraftwerk erzeugte Energie und die in der Speichereinrichtung gespeicherte Energie getrennt in ein Stromnetz einspeisbar sind. Eine derartige Ausgestaltung erhöht die Flexibilität eines erfindungsgemäßen Kraftwerks, da die in der Speichereinrichtung gespeicherte elektrische Energie unabhängig von einem Betrieb des Kraftwerks in das Stromnetz einspeisbar ist und das Kraftwerk unabhängig von einem Laden oder Entladen der Speichereinrichtung betrieben werden kann. Eine derartige Einspeiseeinrichtung umfasst üblicherweise einen Transformator, um die von dem Kraftwerk oder der Speichereinrichtung bereit gestellte Wechselspannung auf beispielsweise 110 kV zu transformieren.

Die Ankoppelung des Kraftwerks und/oder der Speichereinrichtung an das Stromnetz erfolgt üblicherweise mittels einer Leistungselektronik. Die Kombination aus Speichereinrichtung und Leistungselektronik bietet neben dem Leistungs- und Energiefluss eine Reihe von Vorteilen, wie beispielsweise eine extrem schnelle Leistungsbereitstellung; z. B. Volllast in unter 10 ms, Phasensymmetrierung, Oberwellenkompensation, Bereitstellung von Blindleistung, Flickerkompensation und/oder Spannungs- und/oder Frequenzstabilisierung.

Die in der Speichereinrichtung gespeicherte Energie wird erfindungsgemäss als Notstromversorgung für das Kraftwerk eingesetzt, und zwar mittels eines Umrichters und eines Transformators zur Anpassung der in der Speichereinrichtung gespeicherten Energie an die Versorgungsspannung der für die Steuerung des Kraftwerks verwendeten Steuereinrichtung/Schaltanlage. Die Speichereinrichtung gewährleistet somit eine Eigenbedarfssicherung des Kraftwerks zum Anfahren des Kraftwerks nach einem totalen Netzausfall.

Eine vorteilhafte Variante der Erfindung zeichnet sich dadurch aus, dass die Speichereinrichtung zur Bereitstellung und/oder Kompensation einer Blindleistung im Stromnetz ausgebildet ist. Blindleistung und der dazu nötige Blindstrom werden zur Erzeugung elektrostatischer oder elektromagnetischer Felder benötigt. Da sich diese Felder im Takt der Wechselspannung kontinuierlich auf-und wieder abbauen, pendelt die Energie kontinuierlich zwischen Erzeuger und Verbraucher und kann nicht genutzt werden. Gleichzeitig belasten die Blindströme jedoch das Stromversorgungsnetz und die Erzeugeranlagen, da diese für die Bereitstellung des Blindstroms größer ausgelegt werden müssen. Eine Blindleistungskompensation kann beispielsweise durch ein Zuschalten eines zentralen kapazitiven Verbrauchers zu allen induktiven Verbrauchern erzielt werden. Der kapazitive Verbraucher kann einen kapazitiven Blindstrom aufnehmen, der den üblicherweise induktiven Blindstrom der Verbraucher entgegengesetzt gerichtet ist und ihn bis zu ca. 95% aufhebt. Erfindungsgemäß kann die Speichereinrichtung für elektrische Energie als zentraler kapazitiver Verbraucher an das Stromnetz angekoppelt werden.

Weiterhin kann die Speichereinrichtung in einer Variante der Erfindung zur Bereitstellung einer Phasenverschiebung ausgebildet sein.

Gemäß einer zweckmäßigen Variante der Erfindung ist die Speichereinrichtung so ausgelegt, dass wenigstens 1 %, vorzugsweise wenigstens 3 % der maximalen Leistung des Kraftwerks über einen Zeitraum von einer Stunde in der Speichereinrichtung speicherbar oder von dieser abgebbar sind.

Das Verfahren umfasst in einer Variante weiterhin wenigstens einen der folgenden Schritte: Verwendung der in der Speichereinrichtung gespeicherten Energie zur Unterstützung des Kraftwerks zu Hauptlastzeiten mittels einer zusätzlichen Einspeisung der gespeicherten Energie in ein Stromnetz; Verwendung der in der Speichereinrichtung gespeicherten Energie zur Ersetzung des Kraftwerks zu Teillastzeiten mittels einer alleinigen Einspeisung der gespeicherten Energie in das Stromnetz; Verwendung der in der Speichereinrichtung gespeicherten Energie zur Aufladung des Speichers des Kraftwerks; Bereitstellen einer Blindleistung durch die Speichereinrichtung; Kompensation einer Blindleistung durch die Speichereinrichtung; und/oder Bereitstellen einer Phasenverschiebung durch die Speichereinrichtung.

Zum Beispiel kann ein Pumpspeicherkraftwerk im Phasenschieberbetrieb betrieben werden, um im Stromnetz Blindleistung bereitzustellen. Hierbei wird der Generator als Motor eingesetzt, wobei er die hierfür notwendige Energie in der Regel dem Stromnetz selbst entnimmt.

Nachfolgend wird die Erfindung anhand eines in den Figuren dargestellten Ausführungsbeispiels näher erläutert. Es zeigen:
- Figur 1:: eine schematische Ansicht eines erfindungsgemäßen Kraftwerks und
- Figur 2:: ein Leistungsdiagramm eines erfindungsgemäßen Kraftwerks.

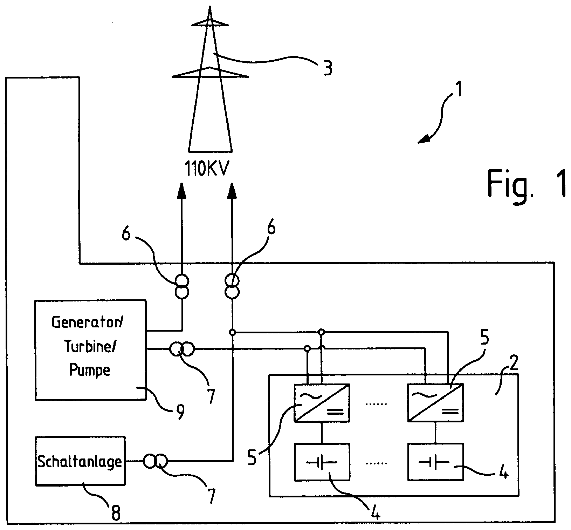

Figur 1 zeigt eine schematische Ansicht eines erfindungsgemäßen Kraftwerks 1, welches als Pumpspeicherkraftwerk 1 ausgebildet ist. Ein Pumpspeicherkraftwerk 1 ist eine besondere Art eines Speicherkraftwerks, welches elektrischen Strom erzeugen oder ihn durch Umwandlung speichern kann. Je nach dem ob ein Überschuss oder ein Bedarf an elektrischer Energie herrscht, arbeitet das Pumpspeicherkraftwerk 1 in zwei Varianten. Im Falle eines Überschusses an elektrischer Energie wird Wasser über Rohrleitungen in ein höher gelegenes Oberbecken (nicht dargestellt) gepumpt. Das Pumpspeicherkraftwerk 1 besteht aus wenigstens einer Einheit 9 umfassend eine Turbine, einen Generator und eine Pumpe. Wird elektrische Energie benötigt, so fließt das Wasser von dem Oberbecken in ein Unterbecken (nicht dargestellt) und treibt dabei die Turbine an, welche wiederum den Generator antreibt und so elektrische Energie erzeugt. Bei einem erneuten Überschuss an Energie wird das Wasser wieder in das Oberbecken gepumpt, um es später wieder zur Stromerzeugung zu nutzen.

Die Einheit 9, umfassend die Turbine, den Generator und die Pumpe, und hat im Pumpbetrieb eine konstante Leistungsaufnahme von ungefähr 150 MW und im Turbinenbetrieb eine regelbare Leistungsabgabe zwischen 0 und ungefähr 150 MW. Das Kraftwerk 1 gemäß Figur 1 umfasst dabei vier Einheiten 9, so dass die maximale Energieerzeugung bei ungefähr 600 MW liegt.

Die von dem Generator erzeugte elektrische Energie wird über eine Einspeiseeinrichtung 6 in ein Stromnetz 3 eingespeist, wobei die Einspeiseeinrichtung 6 einen Transformator umfasst, um die von dem Generator erzeugte Spannung auf die Netzspannung des Stromnetzes 3 zu transformieren, beispielsweise auf 110 kV.

Gesteuert wird das Pumpspeicherkraftwerk 1 über eine Schaltanlage 8. Vorteilhaft an einem Pumpspeicherkraftwerk 1 ist, dass bei einem totalen Netzausfall lediglich die Schaltanlage 8 mit Energie versorgt werden muss, um das Pumpspeicherkraftwerk 1 wieder anzufahren, wobei die diesbezügliche benötigte elektrische Energie im Vergleich zu konventionellen Kraftwerken gering ist.

Erfindungsgemäß umfasst das Pumpspeicherkraftwerk 1 weiterhin eine Speichereinrichtung 2 für elektrische Energie, welche zur Ein- und Ausspeisung von Strom in ein Stromnetz 3 ausgebildet ist. Die in Figur 1 dargestellte Speichereinrichtung 2 weist beispielsweise eine maximale Leistungsaufnahme von 20 MW auf, was ungefähr 3% der maximalen Leistung des Pumpspeicherkraftwerks 1 entspricht, wobei die Speichereinrichtung die 20 MW beispielsweise über eine Stunde aufnehmen oder abgeben kann, was 20 MWh entspricht.

Die Speichereinrichtung 2 umfasst wenigstens einen Akkumulator 4 zur Speicherung von elektrischer Energie. Da elektrische Energie in einem Akkumulator 4 üblicherweise in Form einer Gleichspannung gespeichert wird, umfasst die Speichereinrichtung 2 weiterhin wenigstens einen Umrichter 5, zur geregelten Leistungsaufnahme und -abgabe und Umwandlung einer elektrischen Gleichspannung in eine elektrische Wechselspannung.

Die in der Speichereinrichtung 2 gespeicherte elektrische Energie kann über eine weitere Einspeiseeinrichtung 6 in das Stromnetz 3 eingespeist werden, wobei die weitere Einspeiseeinrichtung 6 vorzugsweise einen Transformator umfasst, um die von dem Umrichter 5 erzeugte Wechselspannung auf die Netzspannung des Stromnetzes 3 zu transformieren. Das Pumpspeicherkraftwerk 1 umfasst somit wenigstens zwei Einspeiseeinrichtungen 6, mittels welcher die in dem Pumpspeicherkraftwerk 1 erzeugte Energie und die in der Speichereinrichtung 2 gespeicherte Energie getrennt in ein Stromnetz 3 einspeisbar ist.

Die in der Speichereinrichtung 2 gespeicherte Energie ist als Notstromversorgung für das Pumpspeicherkraftwerk 1 einsetzbar, wodurch ein sonst üblicherweise zur Notstromversorgung benötigtes Laufwasserkraftwerk überflüssig wird. Zur Notstromversorgung wird die durch den Umrichter 5 erzeugte Wechselspannung mittels eines Transformators 7 an die Versorgungsspannung der für die Steuerung des Pumpspeicherkraftwerks 1 verwendeten Schaltanlage 8 angepasst.

Während des Turbinenbetriebs des Pumpspeicherkraftwerks 1 kann die von dem Generator erzeugte elektrische Energie teilweise mittels eines optionalen Transformators 7 und des Umrichters 5 in dem wenigstens einen Akkumulator 4 der Speichereinrichtung 2 gespeichert werden. Alternativ kann während des Turbinenbetriebs des Pumpspeicherkraftwerks 1 die in der Speichereinrichtung 2 gespeicherte elektrische Energie mittels der weiteren Einspeiseeinrichtung 6 in das Stromnetz 3 eingespeist werden. Somit wird während des Turbinenbetriebs des Pumpspeicherkraftwerks 1 die maximale Leistung des Pumpspeicherkraftwerks 1 um die in der Speichereinrichtung 2 gespeicherten 20 MW erhöht. Im Falle eines geringen Energiebedarfs im Stromnetz 3 kann auch lediglich die in der Speichereinrichtung 2 gespeicherte elektrische Energie in das Stromnetz 3 eingespeist werden, ohne dass dabei die Einheit 9 in Betrieb ist, wobei sich in diesem Bereich der Wirkungsgrad des Pumpspeicherkraftwerks 1 deutlich verbessert.

Im Pumpbetrieb des Pumpspeicherkraftwerks 1 kann gleichzeitig elektrische Energie in der Speichereinrichtung 2 gespeichert werden oder alternativ von der Speichereinrichtung 2 an die Pumpe der Einheit 9 übertragen werden. Dadurch wird der Pumpbetrieb des Pumpspeicherkraftwerks 1 in einem bestimmten Band regelbar, im dargestellten Ausführungsbeispiel um ± 20MW.

Weiterhin ist die Speichereinrichtung 2 zur Bereitstellung und/oder Kompensation einer Blindleistung im Stromnetz 3 ausgebildet, da es sich dabei um einen kapazitiven Verbraucher handelt. Weiterhin kann die Speichereinrichtung 2 zur Bereitstellung einer Phasenverschiebung ausgebildet sein.

Das Verfahren zum Betrieb des Pumpspeicherkraftwerks 1 umfasst die Schritte des Erzeugens von elektrischer Energie in dem Pumpspeicherkraftwerk 1 und Speichern von elektrischer Energie in der Speichereinrichtung 2, wobei die Schritte gleichzeitig oder zeitversetzt ausgeführt werden können. Weiterhin umfasst das Verfahren zum Betrieb des Pumpspeicherkraftwerks 1 wenigstens einen der folgenden Schritte: Verwendung der in der Speichereinrichtung 2 gespeicherten Energie zur Unterstützung des Pumpspeicherkraftwerks 1 zu Hauptlastzeiten mittels einer zusätzlichen Einspeisung der gespeicherten Energie in ein Stromnetz 3; Verwendung der in der Speichereinrichtung 2 gespeicherten Energie zur Ersetzung des Pumpspeicherkraftwerks 1 zu Teillastzeiten mittels einer alleinigen Einspeisung der gespeicherten Energie in das Stromnetz 3; Verwendung der in der Speichereinrichtung 2 gespeicherten Energie zur Aufladung des Pumpspeicherkraftwerks 1, also Pumpen von Wasser vom Unterbecken ins Oberbecken; Bereitstellen einer Blindleistung durch die Speichereinrichtung 2; Kompensation einer Blindleistung durch die Speichereinrichtung 2 und/oder Bereitstellen einer Phasenverschiebung durch die Speichereinrichtung 2.

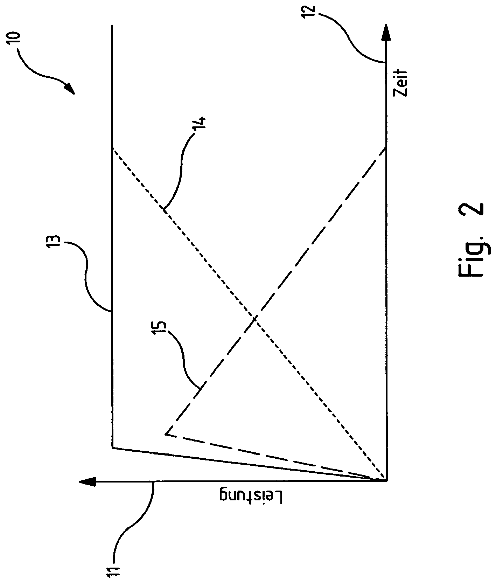

In Figur 2 ist ein Leistungsdiagramm 10 dargestellt, in welchem die von einem erfindungsgemäßen Kraftwerk 1 bereitgestellte Leistung 11 über die Zeit 12 dargestellt ist. Die Gesamtleistung 13 des erfindungsgemäßen Kraftwerks 1 setzt sich dabei gemäß Figur 2 aus der vom Pumpspeicherkraftwerk 1 bereitgestellten Leistung und der von der Speichereinrichtung 2 zusammen. Wie der Figur 2 ebenfalls entnommen werden kann, steigt die von dem Pumpspeicherkraftwerk 1 bereitgestellte Leistung 14 kontinuierlich über die Zeit an, bis sie ein Maximum erreicht. Dieses Maximum kann von dem Pumpspeicherkraftwerk 1 solange bereitgestellt werden, bis sich kein Wasser mehr im Oberbecken des Pumpspeicherkraftwerks 1 befindet.

Die von der Speichereinrichtung 2 bereitgestellte Leistung 15 erreicht schon nach kurzer Zeit die maximal bereitgestellte Leistung, sodass eine Lastanforderung innerhalb kürzester Zeit gedeckt werden kann. Nachfolgend fällt die von der Speichereinrichtung 2 bereitgestellte Leistung kontinuierlich über die Zeit ab, bis die Speichereinrichtung 2 vollkommen entladen ist.

Wie der Figur 2 entnommen werden kann, wird die in der Speichereinrichtung 2 gespeicherte Energie beispielsweise dazu verwendet, eine Lastanforderung in einem Stromnetz 3 während der Anfahrphase eines Kraftwerks 1 zu erfüllen, bis die Lastanforderung von dem Kraftwerk 1 gedeckt wird.

Ein Kraftwerk 1 mit einem Speicher für die zur Energieerzeugung genutzten Materie und einer Speichereinrichtung 2 für elektrische Energie verbessert somit die Flexibilität des Kraftwerks 1, verändert die Gesamtcharakteristik des Leistungsangebots und erhöht den Wirkungsgrad des Kraftwerks 1, insbesondere im unteren Leistungsbereich.

### Bezugszeichenliste:

- 1: Kraftwerk, Pumpspeicherkraftwerk
- 2: Speichereinrichtung
- 3: Stromnetz
- 4: Akkumulator
- 5: Umrichter
- 6: Einspeiseeinrichtung
- 7: Transformator
- 8: Steuereinrichtung/Schaltanlage
- 9: Einheit aus Generator, Turbine, Pumpe
- 10: Leistungsdiagramm
- 11: y-Achse (Leistung)
- 12: x-Achse (Zeit)
- 13: Gesamtleistung
- 14: Leistung Pumpspeicherkraftwerk
- 15: Leistung Speichereinrichtung

## Patentansprüche

1. Verfahren zum Betrieb eines Kraftwerkes (1) als Gaskraftwerk oder Pumpspeicherkraftwerk mit einem Speicher für die zur Erzeugung genutzte Materie sowie mit einer Speichereinrichtung (2) für elektrische Energie, welche zur Einspeisung von Strom in einem Stromnetz (3) ausgebildet ist, mit wenigstens einem Umrichter (5) zur Umwandlung einer elektrischen Gleichspannung in eine elektrische Wechselspannung sowie mit einem Transformator (7), umfassend die Schritte Erzeugung von elektrischer Energie in dem Kraftwerk (1) und Speichern von elektrischer Energie in der Speichereinrichtung (2), wobei das Verfahren die Verwendung der in der Speichereinrichtung (2) gespeicherten Energie zur Unterstützung des Kraftwerkes (1) zu Hauptlastzeiten mittels zusätzlicher Einspeisung der gespeicherten Energie in das Stromnetz (3) umfasst, **dadurch gekennzeichnet, dass** die Speichereinrichtung (2) wenigstens einen Akkumulator umfasst und dass das Verfahren weiterhin den folgenden Schritt umfasst: Verwendung der in der Speichereinrichtung (2) gespeicherten Energie zur Bereitstellung einer Notstromversorgung für das Kraftwerk (1), wobei die in der Speichereinrichtung (2) gespeicherte Energie als Notstromversorgung für das Kraftwerk mittels eines Umrichters (5) und des Transformators (7) an die Versorgungsspannung einer für die Steuerung des Kraftwerks (1) verwendeten Steuereinrichtung (8) angepasst wird.

2. Verfahren nach Anspruch 1, **dadurch gekennzeichnet, dass** das Verfahren weiterhin wenigstens einen der folgenden Schritte umfasst:
Verwendung der in der Speichereinrichtung (2) gespeicherten Energie zur Ersetzung des Kraftwerks (1) zu Teillastzeiten mittels einer alleinigen Einspeisung der gespeicherten Energie in das Stromnetz (3);
Verwendung der in der Speichereinrichtung (2) gespeicherten Energie zur Aufladung des Speichers des Kraftwerks (1);
Bereitstellung einer Blindleistung durch die Speichereinrichtung (2);
Kompensation einer Blindleistung durch die Speichereinrichtung (2);
Bereitstellung einer Phasenverschiebung durch die Speichereinrichtung (2).

3. Verfahren nach Anspruch 1 oder 2, **dadurch gekennzeichnet, dass** das Kraftwerk (1) wenigstens zwei Einspeiseeinrichtungen (6) umfasst, mittels welcher die in dem Kraftwerk (1) erzeugte Energie und die in der Speichereinrichtung (2) gespeicherte Energie getrennt in das Stromnetz (3) eingespeist werden.

4. Verfahren nach einem der Ansprüche 1 bis 3, **dadurch gekennzeichnet, dass** die Speichereinrichtung (2) so ausgelegt ist, dass wenigstens 1 %, vorzugsweise 3 % der maximalen Leistung des Kraftwerks (1) über einen Zeitraum von einer Stunde in der Speichereinrichtung (2) speicherbar oder von dieser abgebbar ist.

## Claims

1. Method for operating a power plant (1) as a gas power plant or pumped-storage power plant comprising a store for the material used for generation and comprising a storage device (2) for electrical energy, which device is designed to feed current into a mains supply (3), comprising at least one convertor (5) for converting an electrical DC voltage into an electrical AC voltage and comprising a transformer (7), the method comprising the steps of generating electrical energy in the power plant (1) and storing electrical energy in the storage device (2), the method comprising using the energy stored in the storage device (2) to support the power plant (1) at peak load times by additionally feeding the stored energy into the mains supply (3), **characterized in that** the storage device (2) comprises at least one accumulator and **in that** the method also comprises the following step:
using the energy stored in the storage device (2) to provide an emergency power supply for the power plant (1), the energy stored in the storage device (2) as an emergency power supply for the power plant being adapted, by means of a converter (5) and the transformer (7), to the supply voltage of a control device (8) used for controlling the power plant (1).

2. Method according to claim 1, **characterized in that** the method also comprises at least one of the following steps:
using the energy stored in the storage device (2) to substitute the power plant (1) at partial load times by solely feeding the stored energy into the mains supply (3);
using the energy stored in the storage device (2) to charge the store of the power plant (1);
providing a reactive power by means of the storage device (2);
compensating for a reactive power by means of the storage device (2);
providing a phase shift by means of the storage device (2).

3. Method according to either claim 1 or claim 2, **characterized in that** the power plant (1) comprises at least two feed-in devices (6) by means of which the energy generated in the power plant (1) and the energy stored in the storage device (2) are fed into the mains supply (3) separately.

4. Method according to any of claims 1 to 3, **characterized in that** the storage device (2) is designed such that at least 1%, preferably 3%, of the maximum power of the power plant (1) can be stored in the storage device (2) or be emitted by said device over a period of an hour.

## Revendications

1. Procédé de fonctionnement d'une centrale électrique (1) comme centrale électrique à gaz ou centrale électrique d'accumulation par pompage comprenant un accumulateur destiné à la matière utilisée pour produire de l'énergie ainsi qu'un dispositif d'accumulation (2) destiné à l'énergie électrique et conçu pour alimenter un réseau électrique (3) en courant, au moins un convertisseur (5) destiné à convertir une tension électrique continue en une tension électrique alternative, et un transformateur (7), le procédé comprenant les étapes de production d'énergie électrique dans la centrale électrique (1) et d'accumulation d'énergie électrique dans le dispositif d'accumulation (2), le procédé comprenant l'utilisation de l'énergie accumulée dans le dispositif d'accumulation (2) pour venir au soutien de la centrale électrique (1) à des heures de charge principale par alimentation supplémentaire du réseau électrique (3) en énergie accumulée, **caractérisé en ce que** le dispositif d'accumulation (2) comprend au moins un accumulateur, et **en ce que** le procédé comprend en outre l'étape suivante :
l'utilisation de l'énergie accumulée dans le dispositif d'accumulation (2) pour fournir une alimentation d'urgence en électricité à la centrale électrique (1), l'énergie accumulée dans le dispositif d'accumulation (2) étant adaptée, en tant qu'alimentation d'urgence de la centrale électrique en électricité, à la tension d'alimentation d'un moyen de commande (8), utilisée pour commander la centrale (1), au moyen d'un convertisseur (5) et du transformateur (7).

2. Procédé selon la revendication 1, **caractérisé en ce que** le procédé comprend en outre au moins l'une des étapes suivantes :
l'utilisation de l'énergie accumulée dans le dispositif d'accumulation (2) pour remplacer la centrale électrique (1) à des heures de charge partielle exclusivement par une alimentation du réseau électrique (3) en énergie accumulée ;
l'utilisation de l'énergie accumulée dans le dispositif d'accumulation (2) pour charger l'accumulateur de la centrale électrique (1) ;
la fourniture d'une puissance réactive par le dispositif d'accumulation (2) ;
la compensation d'une puissance réactive parle dispositif d'accumulation (2) ;
la fourniture d'un décalage de phase par le dispositif d'accumulation (2).

3. Procédé selon la revendication 1 ou 2, **caractérisé en ce que** la centrale électrique (1) comprend au moins deux moyens d'alimentation (6) permettant d'alimenter séparément le réseau électrique (3) en énergie produite dans la centrale électrique (1) et l'énergie accumulée dans le dispositif d'accumulation (2).

4. Procédé selon l'une des revendications 1 à 3, **caractérisé en ce que** le dispositif d'accumulation (2) est conçu de sorte qu'au moins 1 %, de préférence 3 % de la puissance maximale de la centrale électrique (1) puisse être accumulée sur une durée d'une heure dans le dispositif d'accumulation (2) ou être délivrée par celui-ci.
